Europäisches Patentamt

(19) European Patent Office

Office européen des brevets

(11) Publication number: **0 119 972**
**B1**

# (12) EUROPEAN PATENT SPECIFICATION

(45) Date of publication of the patent specification:
06.08.86

(21) Application number: **84850071.6**

(22) Date of filing: **06.03.84**

(51) Int. Cl.⁴: **H 04 L 9/02**, G 09 C 1/04

(54) **Apparatus for ciphering and deciphering digital messages.**

(30) Priority: **14.03.83 SE 8301380**

(43) Date of publication of application:
**26.09.84 Bulletin 84/39**

(45) Publication of the grant of the patent:
**06.08.86 Bulletin 86/32**

(84) Designated Contracting States:
**CH DE GB IT LI**

(56) References cited:
**DE - A - 2 943 726**
**DE - B - 2 142 413**
**SE - B - 331 114**

**IBM TECHNICAL DISCLOSURE BULLETIN, vol. 23,**
**December 1980, no. 7B, pages 3292-3294, c.H.MEYER et**
**al.: "Internal key generation for block ciphers"**
**SCIENTIFIC AMERICAN, vol. 228, May 1973, no. 5, pages**
**15-23, H. FEISTEL: "Cryptography and computer**
**privacy"**

(73) Proprietor: **TELEFONAKTIEBOLAGET L M ERICSSON,**
**S-126 25 Stockholm (SE)**

(72) Inventor: **Arvid, Aman Kurt, Riksradsvägen 52,**
**S-121 60 Johanneshov (SE)**

(74) Representative: **Hedberg, Sten Torsten et al,**
**Telefonaktiebolaget L M Ericsson, S-126 25 Stockholm**
**(SE)**

## Description

### TECHNICAL FIELD

The present invention relates to an apparatus for ciphering and deciphering digital messages according to the preamble of claim 1.

### BACKGROUND ART

Ciphering messages is used to conceal the information therein from unauthorized persons. For example, the information may be of strategic value and then needs to be kept secret for decades. There is thus a demand for strong cryptographic systems which will resist unauthorized attempts to break the cryptogram. In principle, it is easy for unauthorized persons to tap off signals from such as radio links or satellite connections. The longer a ciphered message having a single key, which a cryptogram breaker has access to, the more his work is facilitated in principle. Extremely long messages are obtained in highspeed communications, e.g. in 30-channel PCM transmission, which takes place at 2Mbits/s. In this way, $1{,}72 \cdot 10^{11}$ bits are transmitted during a 24-hour period. Having in mind the rapid computers and the large memory capacities which are already available as forcing aids, there is a demand for extremely strong cryptographic systems. One way of increasing the protective level of a cryptographic system is to change the inner key more often, the cryptographic series being changed each time. This should preferably take place without an outsider becoming acquainted with the key change times, and without manual interference by cipherer. Furthermore, the strength of a cryptographic system may be jeopardized if there is a risk of so-called «parallel messages».

### DISCLOSURE OF INVENTION

The chief object of the present invention is to provide extremely strong cryptographic systems.

This is achieved by the apparatus in accordance with the invention being given the characterizing features disclosed in the claims.

### BRIEF DESCRIPTION OF DRAWINGS

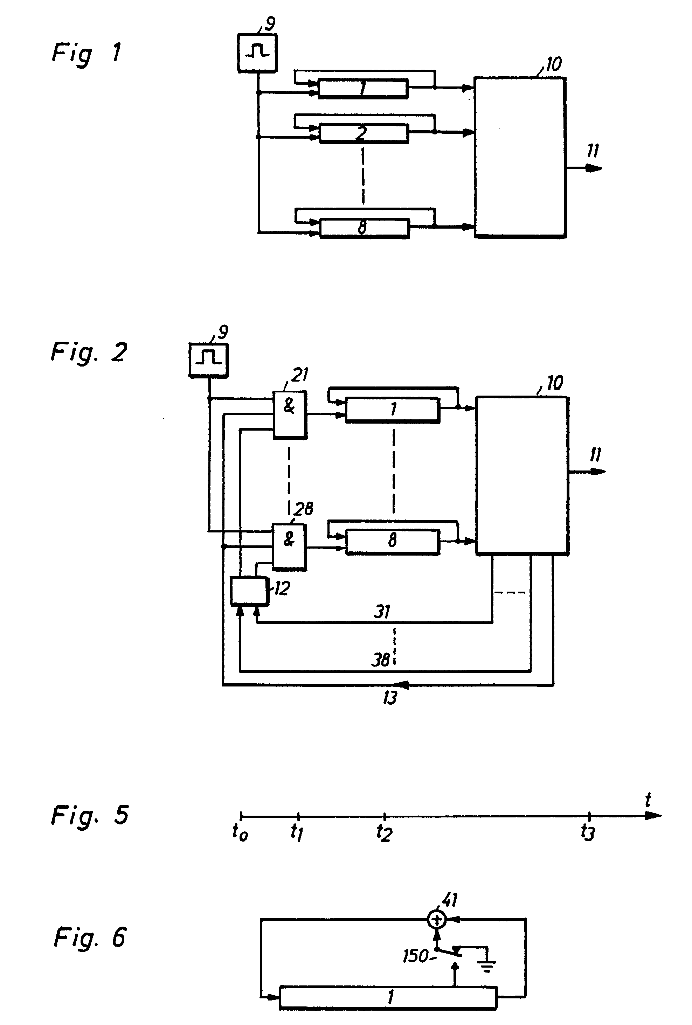

The invention will now be described in detail in conjunction with the appended drawing, on which Figure 1 illustrates the general configuration of a plurality of cryptographic systems known per se, Figures 2-4 illustrate different embodiments of apparatus in accordance with the invention, Figure 5 is a time chart explaining the function on an inventive apparatus and Figure 6 illustrates an embodiment of a switching means associated with the time chart of Figure 5.

### BEST MODES FOR CARRYING OUT THE INVENTION

Figure 1 illustrates the general configuration of a plurality of cryptographic systems known per se. Circulation registers are denoted by the numerals 1-8, and three of the registers are illustrated in the Figure. These may be implemented as shift registers, for example. The registers are stepped with the aid of a stepping pulse generator 9. The outputs of the registers are connected to a logic unit 10. By various operations, which are different in different types of cryptographic systems, its object is to compose the output signals of the registers into a pseudo-random series at the output 11 of the logic unit. This pseudo-random series is used either for ciphering a clear text signal or for deciphering a ciphered signal, e.g. by superposition (modulo-2 addition bit by bit), permutation or substitution.

The content in the registers 1-8 is determined by a so-called inner key, which is changed relatively seldom. This key determines the pseudo-random series. In order to start transmitter and receiver at the same place in the pseudo-random series, information concerning a start position (outer key) for the circulation registers is transferred from the transmitter to the receiver. The transmitter start information generally states how many steps each of the circulation registers shall take from the position determined by the inner key to the position they shall have at the start of the ciphering/deciphering. The start information is randomed, e.g. at each new message, so that it will be different for every message.

Figure 2 illustrates an apparatus in accordance with the invention. The stepping pulse generator 9 steps the corresponding circulation registers 1-8 via AND circuits 21-28. The registers are shown in the Figures as direct feed-back shift registers, but may of course just as well be maximum-length feedback shift registers. It is assumed that for each output signal at 11 the stepping pulse generator 9 sends two stepping pulses. The latter of the two stepping pulses may be stopped or passed through the AND circuits 21-28 via a line 13 from the logic unit 10. The line 13 is fed with pseudo-random control pulses from the logic unit 10. The apparatus further includes a memory 12, e.g. comprising unillustrated memory flip-flops, one for each circulation register. A corresponding number of pseudo-random control pulses control the memory flip-flops in the memory 12, via other lines 31-38 from the logic unit 10. This means that the number of steps for each shift register 1-8 will be one or two per clear text bit, in response to the pseudo-random control pulse series. There is thus obtained irregular stepping of the circulation registers 1-8, making the cryptographic system more difficult to force.

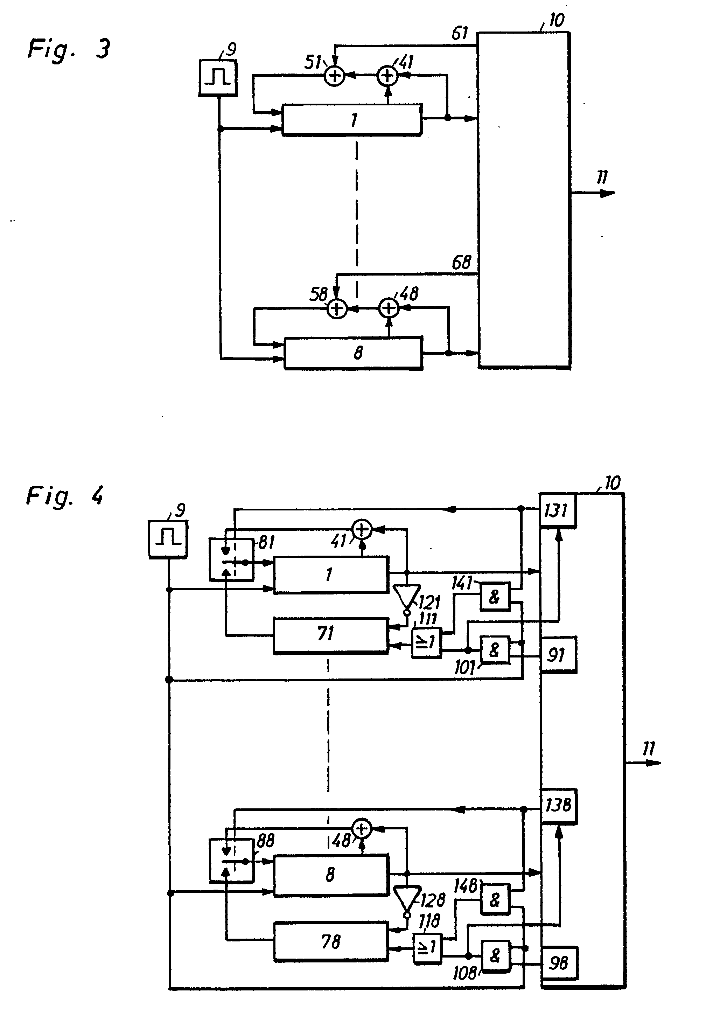

Figure 3 illustrates another embodiment of the apparatus in accordance with the invention. Here the circulation registers 1-8 are illustrated as maximum-length feedback shift registers, but in principle they can of course constitute direct feedback shift registers as in Figure 2. The maximum-length feedback is provided by two of each register's steps being conventionally connected to a corresponding EXCLUSIVE-OR circuit 41-48. With the aid of subsequent EXCLUSIVE-OR circuits 51-58 the polarity of the re-fed bit may be changed or not, in response to the polyrity of signals on the conductors 61-68 from the logic unit 10. The latter signals are pseudo-random control pulses generated in the logic unit 10.

Figure 4 illustrates a further embodiment of the apparatus in accordance with the invention. The circulation registers 1-8 are illustrated in the Figure as maximum-length feedback shift registers, but may naturally be direct feedback registers instead. The circulation registers 1-8 are stepped here by the stepping pulse generator 9 also. An extra register 71-78 is associated with each circulation register 1-8 in a manner illustrated on the Figure. The inputs of the circulation registers 1-8 are provided with switches 81-88. For the sake of simplicity, these are drawn as mechanical switches, but in practice they are electronic.

The corresponding circulation register can take its input signal via the switch, either from the signal fed back from the output or from the output of the corresponding extra register. The switches are controlled by signals from the logic unit 10 in a manner more specifically explained below.

The logic unit 10 includes counters 91-98. These counters can count ones in pseudo-random series internally generated in the logic unit 10. When a counter, e.g. 91, has reached a given value, a corresponding AND circuit 101 is opened, and lets through a stepping pulse via an OR circuit 111 to the corresponding memory register 71. Accordingly, the present output signal is fed from the corresponding circulation register 1 with reversed polarity, e.g. with the aid of an inverter 121, to the first stage of the memory register 71. The stepping pulse obtained on the AND circuit 101 output is simultaneously fed to a second counter 131. When this counter has reached a given value, the memory register 71 is fed with a corresponding number of bits at pseudo-random intervals from the output of the circulation register 1. The corresponding switch 81 is then activated such that the feed-back from the output of the circulation register 1 is interrupted, and the content of the memory register 71 is fed into the circulation register 1 instead, by the memory register 71 being fed with stepping pulses from the stepping pulse generator 9 via an AND circuit 141 and OR circuit 111. When the memory register 71 is empty, the switch 81 returns to its previous state such that the circulation register 1 will be switched in again. The procedure described above will be repeated when the counter 131 once again reaches its mentioned value.

By the described procedure, the different circulation registers 1-8 will change their content at different times, so that the pseudo-random series obtained at the output 11 of the logic unit 10 is modified at pseudo-random times. These times are well concealed for an outsider, since information as to these times does not need to be sent from transmitter to receiver.

Figure 5 is a time chart for illustrating how the invention may be used so that even the least alteration of the outer key will not only give rise to a new starting point in the same pseudo-random series, but also an entirely new pseudo-random series. The risk of parallel messages is thus avoided, and a concealed use of the outer key is also obtained. Furthermore, the time for starting ciphering/deciphering will occur at a pseudo-random distance in time from the transmitted outer key.

In Figure 5, a signal is transmitted during the time between times $t_0$ and $t_1$ this signal telling that the bits during the time $t_1$ and $t_2$ relate to an outer key.

At the time $t_2$ the outer key is finished, and the circulation registers on both transmitter and receiver side are put into a first starting position. In known cryptographic systems, ciphering/deciphering would start at the time $t_2$. In accordance with the invention, however, the start of ciphering/deciphering is delayed until a final starting position is obtained at the time $t_3$. During the time between $t_2$ and $t_3$, the circulation registers 1-8 are stepped, the logic unit 10 accordingly giving pseudo-random control pulses modifying the content and/or stepping of the circulation registers in a way described previously. This gives a very heavy alteration of the content in the circulation registers, so that even the slightest alteration in the outer key results in a greatly changed pseudo-random series at the output 11 of the logic unit 10.

From the cryptological aspect it is advantageous to allow the algorithm according to which the apparatus operates to be different before and after the time $t_3$.

This can take place by the circulation registers being switched at the time $t_3$ from a first working mode to a second working mode.

This is illustrated in Figure 6. During the time between $t_2$ and $t_3$ the circulation registers 1-8 work as direct feedback shift registers. A switch 150, illustrated in Figure 6, which switch being of course an electronic switch, then connects the input of for example the EXCLUSIVE-OR circuit 41 to earth. This means that in this case the output pulses of the shift register 1 are looped back again to the input of the shift register without polarity inversion. At the time $t_3$ the previously earthed input of the EXCLUSIVE-OR circuit 41 is connected to such a flip-flop in the shift register that the register is caused to generate a maximum-length series. Such switching between different working modes preferably takes place for all circulation registers. The pseudo-random series obtained at the output 11 of the logic unit 10 will then be very long.

**Claims**

1. Apparatus for ciphering/deciphering digital messages and including: a) a plurality of circulation registers (1-8), of which the original content of ones and zeroes is predetermined by an inner key, b) means (9) for stepping the circulation registers to obtain output therefrom and c) a logic unit (10) for generating a pseudo-random series on the basis of output pulses from the circulation registers for ciphering/deciphering the messages, characterized in that the logic unit (10) is adapted to send pseudo-random control pulses for modifying the normal stepping and/or content of the circulation registers (1-8).

2. Apparatus as claimed in claim 1, characterized in that said control pulses are intended to affect the stepping rate of at least one of said circulation registers (1-8).

3. Apparatus as claimed in claim 1, characterized in that said control pulses are intended to change the polarity of at least one of the bits in at least one of said circulation registers (1-8) at pseudo-random times.

4. Apparatus as claimed in claim 1, characterized in that for a predetermined number of said circulation registers (1-8) each is assigned a memory register (71-78), in that said control pulses are intended to control the feeding of at least one bit from at least one of the circulation registers to the associated memory register at pseudo-random times, and in that at similarly pseudo-random times the content in at least one of the memory registers (71-78) is arranged for being fed to the associated circulation register for replacing its content.

5. Apparatus as claimed in claim 4, characterized in that an inverter (121-128) is adapted to invert the bits fed into the associated memory register from said circulation register.

6. Apparatus as claimed in claim 1, characterized in that said pseudo-random control pulses are intended for utilization during the time ciphering/deciphering is in progress.

7. Apparatus as claimed in claim 1, an outer key being transmitted from the transmitter to the receiver side for modifying on both sides the original content of the circulation registers (1-8) to a first starting position, characterized in that said pseudo-random control pulses are intended to be utilized during the time from the first starting position ($t_2$) of the circulation registers having been taken up, until a final starting position ($t_3$) has been taken up.

8. Apparatus as claimed in claim 7, characterized in that a counter is arranged for being set to zero at the time for the first starting position of the circulation registers, and for it to be stepped at pseudo-random times as well as for it to start ciphering/deciphering when a given predetermined value has been reached.

9. Apparatus as claimed in claim 8, characterized in that the circulation registers (1-8) are adapted for switching from a first working mode to a second working mode at the time ($t_3$) of the final start position.

10. Apparatus as claimed in claim 9, characterized in that the circulation registers (1-8) are adapted to operate in the first working mode as direct feedback shift registers and in said second working mode as maximum-length feedback shift registers (Figure 6).

**Patentansprüche**

1. Vorrichtung zur Chiffrierung/Dechiffrierung von digitalen Nachrichten und umfassend: a) eine Vielzahl von Umlaufregistern (1-8), von denen der ursprüngliche Inhalt von Einsen und Nullen bestimmt ist durch einen inneren Schlüssel, b) eine Einrichtung (9) zum schrittweisen Steuern der Umlaufregister, um aus ihnen Ausgangsimpulse zu erhalten und c) eine logische Einheit (10) zur Erzeugung einer Pseudo-zufälligen Serie auf der Basis der Ausgangsimpulse aus den Umlaufregistern zur Chiffrierung/Dechiffrierung der Nachrichten, dadurch gekennzeichnet, dass die logische Einheit (10) geeignet ist, um Pseudozufällige Steuerimpulse zu senden, um das normale stufenweise Steuern und/oder den Inhalt der Umlaufregister (1-8) zu modifizieren.

2. Vorrichtung nach Anspruch 1, dadurch gekennzeichnet, dass die Steuerimpulse dazu dienen, die Schrittrate von mindestens einem der Umlaufregister (1-8) zu beeinflussen.

3. Vorrichtung nach Anspruch 1, dadurch gekennzeichnet, dass die Steuerimpulse dazu dienen, die Polarität mindestens eines der Bits in mindestens einem der Umlaufregister (1-8) zu Pseudo-zufälligen Zeiten zu ändern.

4. Vorrichtung nach Anspruch 1, dadurch gekennzeichnet, dass für eine vorbestimmte Anzahl von Umlaufregistern (1-8) jedem ein Speicherregister (71-78) zugeordnet ist, dass die Steuerimpulse dazu dienen, das Zuführen mindestens eines Bits aus mindestens einem der Umlaufregister zu einem zugeordneten Speicherregister zu Pseudo-zufälligen Zeiten zu steuern, und dass in ähnlichen Pseudo-zufälligen Zeiten der Inhalt mindestens eines der Speicherregister (71-78) so gruppiert bzw. organisiert ist, dass er dem zugeordneten Umlaufregister zum Ersetzen seines Inhaltes zugeführt werden kann.

5. Vorrichtung nach Anspruch 4, dadurch gekennzeichnet, dass ein Inverter (121-128) geeignet ist, um die Bits zu invertieren, welche in das zugeordnete Speicherregister aus dem Umlaufregister geliefert wurden.

6. Vorrichtung nach Anspruch 1, dadurch gekennzeichnet, dass die Pseudo-zufälligen Steuerimpulse zur Ausnutzung bzw. Verwertung während des fortschreitenden Chiffrierens/Dechiffrierens dienen.

7. Vorrichtung nach Anspruch 1, wobei ein äusserer Schlüssel aus dem Sender zur Empfängerseite gesendet wird, um auf beiden Seiten den ursprünglichen Inhalt der Umlaufregister (1) in eine erste Startposition zu modifizieren, dadurch gekennzeichnet, dass die Pseudo-zufälligen Steuerimpulse dazu dienen, während der Zeit zwischen der Einnahme der ersten Startposition ($t_2$) der Umlaufregister und der Einnahme einer letzten Startposition ($t_3$) verwendet bzw. verwertet zu werden.

8. Vorrichtung nach Anspruch 7, dadurch gekennzeichnet, dass ein Zähler vorgesehen ist, um im Zeitpunkt für die erste Startposition der Umlaufregister auf Null gesetzt zu werden und um schrittweise zu Pseudo-zufälligen Zeiten gesteuert zu werden und um ausserdem das Chiffrieren/Dechiffrieren zu starten, wenn ein gegebener vorbestimmter Wert erreicht worden ist.

9. Vorrichtung nach Anspruch 8, dadurch gekennzeichnet, dass die Umlaufregister (1-8) geeignet sind, um von einem ersten Arbeitsmodus in einen zweiten Arbeitsmodus in einem Zeitpunkt ($t_3$) der Schlussstartposition zu schalten.

10. Vorrichtung nach Anspruch 9, dadurch gekennzeichnet, dass die Umlaufregister (1-8) geeignet sind, im ersten Arbeitsmodus als direkte Rückkopplungsschieberegister und im zweiten Arbeitsmodus als Maximumlängenrückkopplungsschieberegister (Fig. 6) zu arbeiten.

**Revendications**

1. Appareil pour chiffrer/déchiffrer des messages digitaux comprenant: a) une pluralité de registres de circulation (1-8), dont le contenu original de uns et zéros est prédéterminé par une clé interne, b) des moyens (9) pour cadencer les registres de circulation afin d'obtenir des impulsions de sortie de ces registres de circulation et c) un circuit logique (10) pour générer des séries pseudo-hasardeuses sur la base des impulsions de sortie des registres de circulation pour chiffrer/déchiffrer les messages, caractérisé en ce que le circuit logique (10) est adapté à émettre des impulsions de contrôle pseudo-hasardeuses pour modifier l'avancement normal et/ou le contenu des registres de circulation (1-8).

2. Appareil selon la revendication 1, caractérisé en ce que lesdites impulsions de contrôle sont prévues pour influencer l'avancement d'au moins un desdits registres de circulation (1-8).

3. Appareil selon la revendication 1, caractérisé en ce que lesdites impulsions de contrôle sont prévues pour changer la polarité d'au moins un des bits dans au moins un desdits registres de circulation (1-8) à des moments pseudo-hasardeux.

4. Appareil selon la revendication 1, caractérisé en ce qu'à un nombre prédéterminé desdits registres de circulation (1-8) est associé un registre à mémoire (71-78), que lesdites impulsions de contrôle sont prévues pour contrôler l'injection d'au moins un bit d'au moins un des registres de circulation au registre à mémoire y associé à des instants pseudo-hasardeux, et en ce qu'à des instants similaires pseudo-hasardeux le contenu dans au moins un des registres à mémoire (71-78) est préparé pour être injecté au registre de circulation associé, afin d'y remplacer son contenu.

5. Appareil selon la revendication 4, caractérisé en ce qu'un inverteur (121-128) est adapté pour invertir les bits injectés au registre à mémoire depuis ledit registre de circulation.

6. Appareil selon la revendication 1, caractérisé en ce que lesdites impulsions de contrôle pseudo-hasardeuses sont prévues pour être utilisées pendant que le chiffrage/déchiffrage est en marche.

7. Appareil selon la revendication 1, dans lequel une clé extérieure est transmise du transmetteur au récepteur afin de mettre des deux côtés le contenu original des registres de circulation (1-8) dans une première position de départ, caractérisé en ce que lesdites impulsions de contrôle pseudo-hasardeuses sont prévues pour être utilisées durant le laps de temps entre la première position de départ ($t_2$) des registres de circulation et une position finale de départ ($t_3$).

8. Appareil selon la revendication 7, caractérisé en ce qu'un compteur est arrangé pour être mis à zéro au moment de la première position de départ des registres de circulation et pour être cadencé à des moments pseudo-hasardeux ainsi que pour mettre en marche le chiffrage/déchiffrage dès qu'une valeur prédéterminée a été atteinte.

9. Appareil selon la revendication 8, caractérisé en ce que les registres de circulation (1-8) sont adaptés pour être commutés à l'instant ($t_3$) de la position finale de départ d'un premier mode de travail à un second mode de travail.

10. Appareil selon la revendication 9, caractérisé en ce que les registres de circulation (1-8) sont adaptés pour travailler comme registres de commutation à rétroaction directe dans le premier mode de travail et comme registres de commutation à rétroaction de longueur maximale dans ledit second mode de travail (fig. 6).

Fig 1

Fig. 2

Fig. 5

Fig. 6

Fig. 3

Fig. 4